# EUROPÄISCHE PATENTSCHRIFT

(11) **EP 0 821 815 B1**
(45) Veröffentlichungstag und Bekanntmachung des Hinweises auf die Patenterteilung: **16.06.1999**
(21) Anmeldenummer: 96907291.7
(22) Anmeldetag: 28.03.1996
(51) Int. Cl.: G05B 19/045, G05B 19/05

(54) **AUSGABEVERFAHREN UND ZUGEHÖRIGE AUSGABESCHALTUNG**
OUTPUT-SIGNAL PROCESS AND APPROPRIATE OUTPUT CIRCUIT
PROCEDE D'EMISSION DE SIGNAUX DE SORTIE ET CIRCUIT D'EMISSION CORRESPONDANT

(30) Priorität: 19.04.1995 DE 19514472
(43) Veröffentlichungstag der Anmeldung: 04.02.1998
(73) Patentinhaber: SIEMENS AKTIENGESELLSCHAFT, 80333 München (DE)
(72) Erfinder: KÜNZEL, Richard, D-90592 Schwarzenbruck (DE); MAIER, Mario, D-92224 Amberg (DE)
(86) Internationale Anmeldenummer: DE9600538
(87) Internationale Veröffentlichungsnummer: WO9633449

(56) Entgegenhaltungen:
- EP-A- 0 131 357
- DE-A- 3 123 952

## Beschreibung

Die vorliegende Erfindung betrifft ein Ausgabeverfahren für Prozeßsignale zur Ausgabe der Prozeßsignale an einen zu steuernden Prozeß bei Eintreten einer Ausgabebedingung sowie die zugehörige Ausgabeschaltung.

Bei der Steuerung technischer Prozesse ist es oftmals nötig, laufend die vom technischen Prozeß gelieferten Eingangssignale zu überwachen, während des Überwachens die an den Prozeß gelieferten Ausgangssignale zu halten und bei Eintreten eines bestimmten Eingangssignals die Ausgangssignale umzuschalten. Im Stand der Technik wird das Erreichen des Umschaltepunktes durch einen Komparator überwacht, welcher in diesem Fall einen Interrupt auslöst, wodurch ein Prozessor unterbrochen wird und die Ausgänge umschaltet. Aufgrund nicht vorhersehbarer Interrupt-Sperrzeiten kann es dabei jedoch zu unterschiedlichen Laufzeiten beim Schalten der Ausgänge kommen. Ferner ist es möglich, daß das Interrupt-Programm zum Schalten der Ausgänge durch höherpriore Interrupts unterbrochen wird. Im Ergebnis können die Ausgänge daher nur langsam und nicht mit exakt reproduzierbarer Reaktionszeit umgeschaltet werden.

Aus der DE 32 04 098 A1 ist eine Schaltungsanordnung zur Ausgabe von Steuerinformationen bekannt, bei der mittels einer Zeitgeberschaltung nach Ablauf einer vorgebbaren Zeitspanne aus einem Zwischenspeicher ein Datum an eine periphere Einrichtung übergeben wird.

Aus der EP 0 327 720 A1 ist eine Ein-/Ausgabeschaltung bekannt, bei der in einem Schwellwertdiskriminator ein Eingangssignal mit einem Sollwert verglichen wird.

Die Aufgabe der vorliegenden Erfindung besteht darin, ein Verfahren und die zugehörige Schaltung anzugeben, mittels derer ein schnelles, einfaches und zuverlässiges Umschalten der Ausgänge unter reproduzierbaren Reaktionszeiten erreicht wird.

Die Aufgabe wird für das Verfahren durch die Merkmale des Anspruchs 1 und für die Schaltung durch die Merkmale des Anspruchs 4 gelöst.

Die Ausgabebedingung kann beliebiger Natur sein. Es ist beispielsweise möglich, daß die auszugebenden Prozeßsignale bei Erreichen einer bestimmten Zeit oder bei Drücken einer bestimmten Taste durch einen Menschen ausgelöst werden. In der Regel erfolgt das Ausgeben der auszugebenden Prozeßsignale aber dann, wenn das vom zu steuernden Prozeß gelieferte Eingangssignal mit einem Solleingangssignal übereinstimmt bzw. das Eingangssignal erstmals kleiner (bzw. größer) als das Solleingangssignal wird. Beide Signale werden daher einer als Komparator ausgebildeten Überwachungseinheit zugeführt, welche bei Gleichheit der zugeführten Signale bzw. bei Eintreten der geforderten Relation zwischen den Signalen das Steuersignal auslöst. Das Eingangssignal kann beispielsweise eine bestimmte Kombination einzelner, binärer Eingangssignale oder das Erreichen eines bestimmten, vorgegebenen Zählerstandes sein.

Durch die Merkmale des Anspruchs 2 bzw. des Anspruchs 5 ist es möglich, das Ausgeben der Prozeßsignale zu verhindern, wenn diese noch nicht vollständig in den Zwischenspeicher eingespeichert sind.

Durch die Merkmale des Anspruchs 3 bzw. des Anspruchs 6 ist es möglich, auch dann in den Ausgabespeicher neue Signale einzuspeichern, wenn die Ausgabebedingung nicht erfüllt ist.

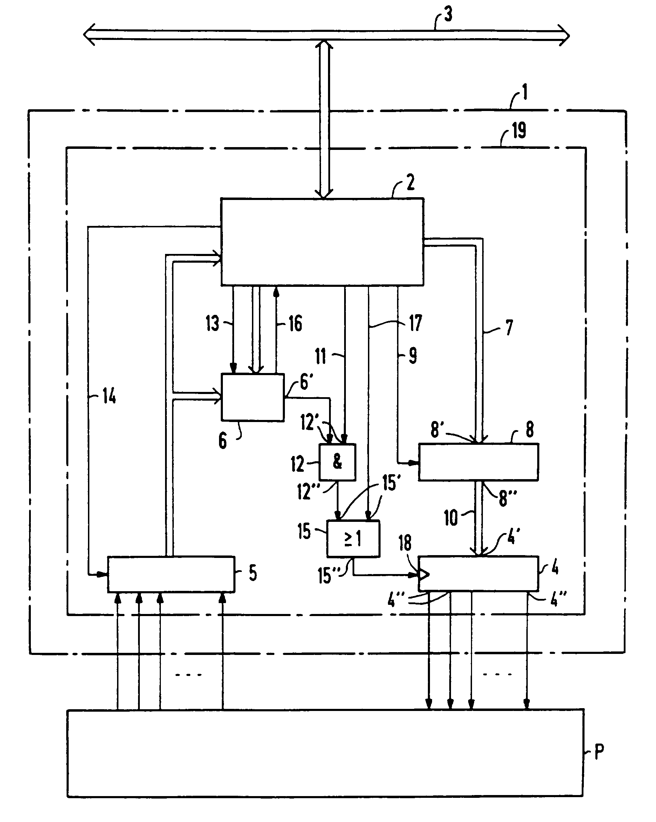

Weitere Vorteile und Einzelheiten ergeben sich aus der nachfolgenden Beschreibung eines Ausführungsbeispiels. Dabei zeigt
- FIG 1: eine Baugruppe einer speicherprogrammierbaren Steuerung.

Gemäß FIG 1 weist eine Baugruppe 1 einer speicherprogrammierbaren Steuerung eine Logikeinheit 2 auf. Die Logikeinheit 2 ist mit einem Bus 3 verbindbar. Über den Bus 3 ist die Logikeinheit 2 in der Lage, mit anderen, in FIG 1 nicht dargestellten Baugruppen der speicherprogrammierbaren Steuerung zu kommunizieren, insbesondere mit der Zentraleinheit der speicherprogrammierbaren Steuerung.

Die Baugruppe 1 gibt über den Ausgabespeicher 4 Ausgangssignale an einen zu steuernden technischen Prozeß P aus. Der Ausgabespeicher 4 ist typisch als Latch ausgebildet. Ebenso liest die Baugruppe 1 über den Eingabespeicher 5, der ebenfalls als Latch ausgebildet ist, Eingangssignale in die Baugruppe 1 ein. Alternativ könnte der Eingabespeicher 5 z. B. auch als Zähler oder als serielle Schnittstelle ausgebildet sein. Die eingelesenen Eingangssignale werden in der Baugruppe 1 mit einem Solleingangssignal verglichen. Bei Gleichheit werden dem Ausgabespeicher 4 neue Ausgangssignale zugeführt, welche in diesen eingespeichert und an den Prozeß P ausgegeben werden. Dies geschieht wie folgt:

In der Logikeinheit 2 ist abgespeichert, bei welchem Eingangssignalmuster die Ausgangssignale geändert werden müssen und welchen Wert die dann auszugebenden Prozeßsignale aufweisen. Die Logikeinheit 2 speichert daher dieses Eingangssignalmuster als Solleingangssignal im Komparator 6 ab. Ferner legt die Logikeinheit 2 über die Leitungen 7 die auszugebenden Prozeßsignale an den Zwischenspeichereingang 8' des Zwischenspeichers 8 an. Sodann aktiviert die Logikeinheit 2 über die Steuerleitung 9 den Zwischenspeicher 8, der wiederum als Latch ausgebildet ist. Dadurch werden die anliegenden Prozeßsignale in den Zwischenspeicher 8 übernommen, dort eingespeichert und über den Zwischenspeicherausgang 8" und die Leitungen 10 an den Ausgabespeichereingang 4' des Ausgabespeichers 4 weitergegeben.

Um ein Ansprechen des Komparators 6 zur falschen Zeit verhindern zu können, ist zwischen Komparator 6 und Ausgabespeicher 4 ein UND-Gatter 12 angeordnet. Je ein Eingang 12' des UND-Gatters 12 ist mit dem Komparatormeldeausgang 6' bzw. über die Steuerleitung 11 mit der Logikeinheit 2 verbunden. Während des Abspeicherns der auszugebenden Prozeßsignale im Zwischenspeicher 8 und des Vorgebens des Solleingangssignals an den Komparator 6 gibt die Logikeinheit 2 über die Steuerleitung 11 ein Sperrsignal mit dem Wert 0 aus. Dadurch wird bewirkt, daß ein eventuelles vorzeitiges Ansprechen des Komparators 6 im UND-Gatter 12 blockiert wird. Nach Beendigung der Speichervorgänge aktiviert die Logikeinheit 2 über die Steuerleitung 13 den Komparator 6. Ferner setzt sie das über die Steuerleitung 11 ausgegebene Sperrsignal auf 1, so daß der Ausgang 12" des UND-Gatters 12 durch das Ausgangssignal des Komparator 6 bestimmt ist.

Die Logikeinheit 2 aktiviert in diesem Betriebszustand laufend über die Steuerleitung 14 den Eingabespeicher 5, so caß laufend die vom Prozeß P anstehenden Eingangssignale in den Eingabespeicher 5 eingelesen und an die Logikeinheit 2 und den Komparator 6 weitergegeben werden. Der Komparator 6 vergleicht die vom zu steuernden Prozeß P gelieferten Eingangssignale und das zuvor von der Logikeinheit 2 übermittelte Solleingangssignal miteinander. Wenn die Signale übereinstimmen, löst der Komparator 6 ein Steuersignal aus, welches vom Komparatormeldeausgang 6' über das UND-Gatter 12 und das ODER-Gatter 15 dem Ausgabespeichersteuereingang 18 des Ausgabespeichers 4 zugeführt wird. Der Ausgabespeicher 4 übernimmt daraufhin die vom Zwischenspeicher 8 weitergegebenen Prozeßsignale und gibt sie über den Ausgabespeicherausgang 4" an den zu steuernden Prozeß P aus.

Der Komparator 6 meldet das Eintreten der Ausgabebedingung ferner über die Steuerleitung 16 an die Logikeinheit 2, so daß diese erneut den Komparator 6 mit einem neuen Solleingangssignal und den Zwischenspeicher 8 mit neuen auszugebenden Prozeßsignalen laden kann, so daß sich der Vorgang bei der nächsten Signalgleichheit wiederholt.

Um auf den Ausgabespeicher 4 unabhängig vom Ausgangssignal des Komparators 6 zugreifen zu können, ist zwischen dem UND-Gatter 12 und dem Ausgabespeichersteuereingang 18 das ODER-Gatter 15 angeordnet. Die Eingänge 15' des ODER-Gatters 15 sind einerseits mit dem Ausgang 12" des UND-Gatters 12 und andererseits über die Steuerleitung 17 mit der Logikeinheit 2 verbunden. Der Ausgang 15" des ODER-Gatters 15 ist mit dem Ausgabespeichersteuereingang 18 verbunden. Das über die Steuerleitung 17 ausgegebene Freigabesignal hat im Regelfall den Wert 0, so daß das Ausgangssignal des ODER-Gatters 15 durch das Ausgangssignal des UND-Gatters 12 bestimmt ist. Wenn das Freigabesignal auf der Steuerleitung 17 den Wert 1 annimmt, können aber unabhängig vom Ausgangssignal des Komparators 6 neue Werte in den Ausgabespeicher 4 eingespeichert werden. Dies ist immer dann erforderlich, wenn das Ausgabesignal des Ausgabespeichers 4 aus anderen Gründen als dem Eintreten der Ausgabebedingung gewechselt werden soll. Beispiel derartiger Fälle finden sich vor allem im Anlauf der Steuerung und bei unvorhergesehenen Ereignissen, z. B. Nothaltanforderungen.

Die obenstehend beschriebene Schaltung kann diskret aufgebaut sein. Vorzugsweise ist sie jedoch in einem integrierten Schaltkreis 19 angeordnet. Sie ist in einer Baugruppe einer modularen speicherprogrammierbaren Steuerung einsetzbar.

## Patentansprüche

1. Ausgabeverfahren für Prozeßsignale zur Ausgabe der Prozeßsignale an einen zu steuernden Prozeß (P), wobei die Prozeßsignale bei Eintreten einer Ausgabebedingung ausgegeben werden, mit folgenden Schritten:
- die auszugebenden Prozeßsignale werden in einen Zwischenspeicher (8) eingespeichert und von dem Zwischenspeicher (8) an einen Ausgabespeicher (4) weitergegeben,
- die Ausgabebedingung wird durch einen Komparator (6), dem ein vom zu steuernden Prozeß (P) geliefertes Eingangssignal und ein Solleingangsignal zugeführt wird, auf ihr Eintreten überwacht,
- der Komparator (6) vergleicht das vom zu steuernden Prozeß (P) gelieferte Eingangssignal und das Solleingangssignal miteinander und übermittelt bei Eintreten der Ausgabebedingung ein Steuersignal an den Ausgabespeicher (4),
- der Ausgabespeicher (4) übernimmt bei Vorliegen des Steuersignals die vom Zwischenspeicher (8) weitergegebenen Prozeßsignale und gibt sie an den zu steuernden Prozeß (P) aus.

2. Ausgabeverfahren nach Anspruch 1, **dadurch gekennzeichnet,**
- daß die auszugebenden Prozeßsignale von einer Logikeinheit (2) bereitgestellt werden,
- daß das Steuersignal zunächst mit einem von der Logikeinheit (2) gelieferten Sperrsignal verUNDet wird und
- daß das verUNDete Signal an den Ausgabespeicher (4) übermittelt wird.

3. Ausgabeverfahren nach Anspruch 2, **dadurch gekennzeichnet,**
- daß das verUNDete Signal mit einem von der Logikeinheit (2) gelieferten Freigabesignal verODERt wird und
- daß das verODERte Signal an den Ausgabespeicher (4) übermittelt wird.

4. Ausgabeschaltung für Prozeßsignale,
- mit einem Ausgabespeicher (4), in dem bei Anliegen eines Einschreibesignals an einem Ausgabespeichersteuereingang (18) über einen Ausgabespeichereingang (4') Prozeßsignale abspeicherbar sind, die über einen Ausgabespeicherausgang (4") an einen zu steuernden Prozeß (P) ausgebbar sind,
- mit einem Zwischenspeicher (8), in dem über einen Zwischenspeichereingang (8') Prozeßsignale zwischenspeicherbar sind, die über einen Zwischenspeicherausgang (8") an den Ausgabespeicher (4) übermittelbar sind,
- mit einem Komparator (6), mit dem das Eintreten einer Ausgabebedingung für die Prozeßsignale überwachbar ist, dem einerseits ein vom zu steuernden Prozeß (P) einzulesendes Eingangssignal und andererseits ein Solleingangssignal zuführbar ist, wobei bei Eintreten der Ausgabebedingung über einen Komparatormeldeausgang (6') ein Steuersignal abgreifbar ist,
- wobei der Ausgabespeichereingang (4') mit dem Zwischenspeicherausgang (8") und der Ausgabespeichersteuereingang (18) mit dem Komparatormeldeausgang (6') verbunden ist.

5. Ausgabeschaltung nach Anspruch 4, **dadurch gekennzeichnet,**
- daß sie eine Logikeinheit (2) aufweist, die mit dem Zwischenspeichereingang (8') verbunden ist,
- daß sie ein UND-Gatter (12) mit zwei UND-Gattereingängen (12') und einem UND-Gatterausgang (12") aufweist,
- daß je einer der UND-Gattereingange (12') mit dem Komparatormeldeausgang (6') und der Logikeinheit (2) verbunden ist und
- daß der UND-Gatterausgang (12") mit dem Ausgabespeichersteuereingang (18) verbunden ist.

6. Ausgabeschaltung nach Anspruch 5, **dadurch gekennzeichnet,**
- daß sie ein ODER-Gatter (15) mit zwei ODER-Gattereingängen (15') und einem ODER-Gatterausgang (15") aufweist,
- daß sie ein ODER-Gatter (15) mit zwei ODER-Gattereingängen (15') und einem ODER-Gatterausgang (15") aufweist,
- daß je einer der ODER-Gattereingänge (15') mit dem UND-Gatterausgang (12") und der Logikeinheit (2) verbunden ist und
- daß der ODER-Gatterausgang (15") mit dem Ausgabespeichersteuereingang (18) verbunden ist.

7. Ausgabeschaltung nach einem der Ansprüche 4 bis 6, **dadurch gekennzeichnet,** daß sie in einen integrierten Schaltkreis (19) integriert ist.

8. Baugruppe einer modularen speicherprogrammierbaren Steuerung, mit einer Ausgabeschaltung nach einem der Ansprüche 4 bis 7.

## Claims

1. Output method for process signals for outputting the process signals to a process (P) to be controlled, the process signals being output when an output condition occurs, having the following steps:
- the process signals to be output are stored in a buffer store (8) and are passed on from the buffer store (8) to an output store (4),
- the output condition is monitored for its occurrence by a comparator (6) to which an input signal, which is supplied by the process (P) to be controlled, and a nominal input signal are supplied,
- the comparator (6) compares the input signals supplied from the process (P) to be controlled and the nominal input signal with one another and, when the output condition occurs, transmits a control signal to the output store (4),
- when the control signal is present, the output store (4) accepts the process signals passed on from the buffer store (8) and emits them to the process (P) to be controlled.

2. Output method according to Claim 1, characterized
- in that the process signals to be output are provided by a logic unit (2),
- in that the control signal is initially AND-linked to an inhibit signal supplied from the logic unit (2), and
- in that the AND-linked signal is transmitted to the output store (4).

3. Output method according to Claim 2, characterized
- in that the AND-linked signal is OR-linked with an enable signal supplied from the logic unit (2), and
- in that the OR-linked signal is transmitted to the output store (4).

4. Output circuit for process signals
- having an output store (4) in which process signals can be stored via an output store input (4') and can be output via an output store output (4") to a process (P) to be controlled, when a write signal is present at an output store control input (18),
- having a buffer store (8) in which process signals can be buffer-stored via a buffer store input (8') and can be transmitted via a buffer store output (8") to the output store (4),
- having a comparator (6) by means of which the occurrence of an output condition for the process signals can be monitored, to which, on the one hand, an input signal to be read from the process (P) to be controlled can be supplied and, on the other hand, a nominal input signal can be supplied, it being possible to pick off a control signal via a comparator signalling output (6') when the output condition occurs,
- the output store input (4') being connected to the buffer store output (8"), and the output store control input (18) being connected to the comparator signalling output (6').

5. Output circuit according to Claim 4, characterized
- in that said output circuit has a logic unit (2) which is connected to the buffer store input (8'),
- in that said output circuit has an AND gate (12) with two AND gate inputs (12') and one AND gate output (12"),
- in that one of the AND gate inputs (12') is connected to the comparator signalling output (6') and the other is connected to the logic unit (2), and
- in that the AND gate output (12") is connected to the output store control input (18).

6. Output circuit according to Claim 5, characterized
- in that said output circuit has an OR gate (15) with two OR gate inputs (15') and one OR gate output (15"),
- in that one of the OR gate inputs (15') is connected to the AND gate output (12") and the other is connected to the logic unit (2), and
- in that the OR gate output (15") is connected to the output store control input (18).

7. Output circuit according to one of Claims 4 to 6, characterized in that said output circuit is integrated in an integrating circuit (19).

8. Assembly of a modular programmable logic controller, having an output circuit according to one of Claims 4 to 7.

## Revendications

1. Procédé d'émission de signaux de sortie pour l'émission de signaux de sortie en direction d'un processus (P) à piloter, les signaux de sortie étant émis à l'apparition d'une condition d'émission, selon les phases suivantes :
- les signaux de sortie à émettre sont stockés dans une mémoire temporaire (8) et transmis par la mémoire temporaire (8) à une mémoire de sortie (4),
- l'apparition de la condition d'émission est surveillée par un comparateur (6) auquel sont envoyés un signal d'entrée issu du processus (P) à piloter et un signal d'entrée de consigne,
- le comparateur (6) compare le signal d'entrée issu du processus (P) à piloter et le signal d'entrée de consigne et, à l'apparition de la condition d'émission, transmet un signal de commande à la mémoire de sortie (4),
- en présence du signal de commande, la mémoire de sortie (4) prend en charge les signaux de sortie transmis par la mémoire temporaire (8) et les émet vers le processus (P) à piloter.

2. Procédé d'émission de signaux de sortie selon la revendication 1, caractérisé en ce que
- les signaux de sortie à émettre proviennent d'une unité logique (2),
- le signal de commande passe d'abord dans un opérateur ET avec un signal d'arrêt issu de l'unité logique (2),
- le signal traité dans l'opérateur ET est transmis à la mémoire de sortie (4).

3. Procédé d'émission de signaux de sortie selon la revendication 2, caractérisé en ce que
- le signal traité dans l'opérateur ET passe dans un opérateur OU avec un signal de libération issu de l'unité logique (2) et
- le signal traité dans l'opérateur OU est transmis à la mémoire de sortie (4).

4. Circuit d'émission de signaux de sortie,
- ayant une mémoire de sortie (4), dans laquelle, en présence d'un signal d'écriture à une entrée de commande (18) de la mémoire de sortie (4), des signaux de sortie peuvent être enregistrés par une entrée (4') de la mémoire de sortie, et émis vers un processus (P) à piloter, par une sortie (4") de la mémoire de sortie,
- ayant une mémoire temporaire (8), dans laquelle des signaux de sortie peuvent être provisoirement enregistrés par une entrée (8') et transmis à la mémoire de sortie (4) par la sortie (8") de la mémoire temporaire,
- ayant un comparateur (6), qui permet de surveiller l'apparition d'une condition d'émission pour les signaux de sortie, auquel peuvent être envoyés d'une part, un signal d'entrée issu du processus (P) à piloter et d'autre part, un signal d'entrée de consigne, un signal de commande pouvant être relevé sur une sortie d'ordres (6') du comparateur à l'apparition de la condition d'émission,
- l'entrée (4') de la mémoire de sortie étant reliée à la sortie (8") de la mémoire temporaire et l'entrée de commande (18) de la mémoire de sortie étant reliée à la sortie d'ordres (6') du comparateur.

5. Circuit d'émission selon la revendication 4, caractérisé en ce que
- il comporte une unité logique (2), reliée à l'entrée (8') de la mémoire temporaire,
- il comporte un opérateur ET (12) ayant deux entrées (12') et une sortie (12"),
- les entrées (12') de l'opérateur ET sont reliées respectivement à la sortie d'ordres (6') du comparateur et à l'unité logique (2)
- la sortie (12") de l'opérateur ET est reliée à l'entrée de commande (18) de la mémoire de sortie (4).

6. Circuit d'émission selon la revendication 5, caractérisé en ce que
- il comporte un opérateur OU (15) ayant deux entrées (15') et une sortie (15"),
- les entrées (15') de l'opérateur OU sont reliées respectivement à la sortie (12") de l'opérateur ET et à l'unité logique (2) et
- la sortie (15") est reliée à l'entrée de commande (18) de la mémoire de sortie (4).

7. Circuit d'émission selon l'une des revendications de 4 à 6, caractérisé en ce qu'il est intégré dans un circuit intégré (19).

8. Module d'automate programmable modulaire ayant un circuit d'émission selon l'une des revendications de 4 à 7.
